# EUROPÄISCHE PATENTANMELDUNG

(11) **EP 2 426 404 A1**
(43) Veröffentlichungstag der Anmeldung: **07.03.2012**
(21) Anmeldenummer: 11180193.2
(22) Anmeldetag: 06.09.2011
(51) Int. Cl.: F21S 9/03, F21S 8/00, G09F 19/22, F21Y 101/02, F21W 131/107, F21V 21/00

(54) **Beleuchtungspaneel**

(30) Priorität: 07.09.2010 DE 202010012287 U
(71) Anmelder: SWS Gesellschaft für Glasbaubeschläge mbH, 51538 Waldbröl (DE)
(72) Erfinder: Rosenthal, Horst, 51545 Waldbröl (DE)
(74) Vertreter: Lippert, Hans-Joachim

(57) **Zusammenfassung**

Die Erfindung betrifft ein Beleuchtungspaneel mit einer ersten Scheibe aus einem Licht leitenden Material und mit mindestens einer Leuchteinrichtung, welche Licht in die Scheibe einstrahlt, wobei die Scheibe eine Lichtaustrittsfläche aufweist, so dass die Scheibe ein Beleuchtungselement darstellt, und mit einer Halterung zur Befestigung des Paneels an einer Tragkonstruktion, wobei dem Beleuchtungspaneel eine Stromversorgung zugeordnet ist, welche die Leuchteinrichtung elektrisch speist. Erfindungsgemäß umfasst das Beleuchtungspaneel a) eine photovoltaisch wirksame Solarscheibe, durch welche unter Sonnenlichteinstrahlung ein Photostrom erzeugbar ist, und welche von der Beleuchtungsscheibe verschieden oder mit dieser identisch sein kann, und b)(i) eine Einspeiseeinrichtung, mittels welcher der von dem Beleuchtungspaneel erzeugte Photostrom in einen Akkumulator und/oder in ein Stromnetz einspeisbar ist, und/oder (ii) einen von dem Photostrom speisbaren Akkumulator, und wobei ferner die Einspeiseeinrichtung und/oder der Akkumulator zum Betrieb der Leuchteinrichtung mit dieser stromführend verbunden ist. Besonders bevorzugt ist der Akkumulator an der Halterung des Beleuchtungspaneels angebracht. (Fig. 2)

## Beschreibung

Die Erfindung betrifft ein Beleuchtungspaneel mit einer ersten Scheibe aus einem Licht leitenden Material und mit mindestens einer Leuchteinrichtung, welche Licht in die Scheibe einstrahlt, wobei die Scheibe eine Lichtaustrittsfläche aufweist, so dass die Scheibe ein Beleuchtungselement darstellt, und mit einer Halterung zur Befestigung des Paneels an einer Tragkonstruktion, wobei dem Beleuchtungspaneel eine Stromversorgung zugeordnet ist, welche die Leuchteinrichtung elektrisch speist.

Derartige Beleuchtungspaneele werden zu Beleuchtungszwecken an Gebäuden eingesetzt, insbesondere auch im Außenbereich derselben. Die Beleuchtungspaneele dienen teilweise als architektonische Gestaltungselemente des Gebäudes. Derartige Beleuchtungspaneele können jedoch auch eine technische Beleuchtungsfunktion haben, beispielsweise um Bereiche vor einem Gebäude, Eingangsbereiche an dem Gebäude oder dergleichen zu beleuchten. Durch derartige Beleuchtungspaneele ist eine großflächige Beleuchtung von Gebäuden oder von an diese angrenzenden Bereiche möglich.

Gattungsgemäße Beleuchtungspaneele werden teilweise großflächig, d.h. in Anordnungen mit einer Vielzahl derartiger Paneele, an Gebäuden eingesetzt, um bestimmte lichtoptische Effekte zu erzielen. Es ist dann erforderlich, ausgehend von den gegebenen Stromversorgungseinrichtungen des Gebäudes, jeweils eine elektrische Verbindung mit den Beleuchtungspaneelen herzustellen, was dann sehr aufwändig ist. Weiterhin ist es oftmals gewünscht, derartige Beleuchtungspaneele an nur schwer zugänglichen Stellen zu montieren. Dies bedeutet einen hohen Montageaufwand. Es muss dann weiterhin aber auch eine Stromversorgung an derart schwer zugänglichen Stellen eines Gebäudes bereitgestellt werden. Insbesondere dann, wenn ein Gebäude nachträglich mit derartigen Beleuchtungspaneelen ausgestattet werden soll, ist dies mit einem beträchtlichen Aufwand versehen.

Der Erfindung liegt die Aufgabe zugrunde, ein Beleuchtungspaneel zu schaffen, welches eine einfache Nachrüstung an Gebäuden sowie eine großflächige Bedeckung von Gebäudeflächen auf einfache Weise ermöglicht.

Die Aufgabe wird durch ein Beleuchtungspaneel nach Anspruch 1 gelöst. Erfindungsgemäß umfasst dieses Beleuchtungspaneel eine Solarscheibe, welche vorzugsweise zumindest teilweise überdeckend mit der mit der Leuchteinrichtung versehenen ersten Scheibe angeordnet ist, wobei das Beleuchtungspaneel weiterhin eine Einspeiseeinrichtung aufweist, mittels welcher der von der Solarscheibe erzeugte Photostrom in einen Akkumulator einspeisbar ist, und/oder einen von dem Photostrom speisbaren Akkumulator. Die Leuchteinrichtung ist mit dem Akkumulator stromführend verbunden oder verbindbar, wozu vorzugsweise Anschlussteile zur elektrischen Verbindung mit einem Akkumulator an dem Paneel vorgesehen sind, so dass bei Bedarf die Leuchteinrichtung von dem Akkumulator gespeist werden kann. Gegebenenfalls kann alternativ oder zusätzlich die Einspeiseeinrichtung mit einem externen Stromnetz verbunden oder verbindbar sein, wozu vorzugsweise entsprechende elektrische Anschlussteile an dem Paneel vorgesehen sein können. Gegebenenfalls keine eine Einspeisung in den an dem Paneel vorgesehenen oder diesem zugeordneten Akkumulator bevorzugt erfolgen, wobei eine Steuerungseinrichtung vorgesehen ist, um bei Erreichen eines vorbestimmten Ladezustandes des Akkumulators den Überschuss an erzeugtem Photostrom in ein externes Stromnetz oder Akkumulators anderer elektrischer Einrichtungen vorzunehmen.

Unter einem Akkumulator im Sinne der Erfindung sei insbesondere ein (vorzugsweise mehrfach) wiederaufladbarer Speicher für elektrische Energie verstanden, beispielsweise ein Ni-Cd-Akku, Nickel-Metallhydrid- oder Li-Ionen-Akku (einschließlich Li-Metall-, Li-Polymer- und Li-Polymer-Metall-Akku).

Die Beleuchtungsscheibe (erste Scheibe), welche der Gebäudebeleuchtung (einschließlich Beleuchtung der Gebäudeumgebung) dienen kann, und die Solarscheibe sind somit jeweils an ein und demselben Beleuchtungspaneel vorgesehen. Bei Montage des Beleuchtungspaneels an einer bestimmten Stelle des Gebäudes, welche in Bezug auf die beleuchtete Scheibe ausgewählt ist, ist das Beleuchtungspaneel somit unmittelbar mit seiner eigenen Stromversorgung ausgestattet. Es ist somit nicht mehr erforderlich, die jeweilige Leuchteinrichtung mittels einer extern angeordneten Solarscheibe bzw. Solarmodul mit Strom zu versorgen, was oftmals sehr aufwändig wäre, da extern angeordnete Solarmodule zumeist an Gebäudebereichen angebracht sind, wie z. B. auf Dächern, welche von den Bereichen, an welchen die Anordnung von Beleuchtungspaneelen erwünscht ist, weit beabstandet sind. Eine elektrische Versorgung der Leuchteinrichtung mittels extern angeordneter Beleuchtungspaneele ist dann jedoch überaus aufwändig. Das erfindungsgemäße Beleuchtungspaneel kann daher insbesondere in der Ausführungsform, in welcher das Beleuchtungspaneel mit einem Akkumulator ausgestattet ist, völlig autark bzw. im "stand alone Betrieb" eingesetzt werden. Zwar ist es bekannt, Solarmodule zur Stromversorgung von räumlich isolierten elektrischen Einrichtungen vorzusehen. Dadurch, dass jedoch erfindungsgemäß die Licht auskoppelnde erste Scheibe an demselben Paneel angeordnet ist wie die Solarscheibe, vorzugsweise mit dieser teilweise oder vollständig überdeckend, ist zudem eine überaus platzsparende Anordnung gegeben. Dies ermöglicht zum einen, dass bei großflächiger Ausstattung von Gebäuden mit Beleuchtungsscheiben zugleich auch eine großflächige Bedeckung der Gebäudeaußenhaut mit Solarscheiben erfolgen kann, auch wenn nur begrenzte Montagefläche an dem Gebäude zur Verfügung steht. Hierdurch kann das Gebäude zudem mit einer besonders hohen Energieeffizienz betrieben werden. Andererseits können hierdurch auch großflächige Gebäudebedeckungen mit Solarscheiben gestalterisch flexibel und den jeweiligen architektonischen bzw. optischen Anforderungen entsprechend gestaltet werden, da aufgrund der gemeinsamen Anordnung von Beleuchtungs-und Solarscheiben an einem Paneel, die Beleuchtungsscheiben das optische Erscheinungsbild des Gebäudes bestimmen können. Vorzugsweise überdecken die Beleuchtungsscheiben und Solarscheiben auch hier einander zumindest teilweise oder besonders bevorzugt einander vollflächig. Eine vollflächige Bedeckung ist gegeben, wemm zumindest die kleinere der beiden Scheiben vollflächig durch die größere Scheibe bedeckt ist, wobei die Solarscheibe oder vorzugsweise die Beleuchtungsscheibe (erste Scheibe) die größere Scheibe sein kann. Vorzugsweise weisen Solarscheibe und Beleuchtungsscheibe dieselbe Größe auf und bedecken einander zumindest teilweise oder vollflächig.

Auch dann, wenn das erfindungsgemäße Beleuchtungspaneel mit einer Einspeiseeinrichtung versehen ist, welche den durch die Solarscheibe erzeugten Photostrom über die Einspeiseeinrichtung in einen externen Akkumulator einspeist, welcher die Leuchteinrichtung mit Strom versorgt, ist eine vorteilhafte Ausgestaltung des Gebäudes gegeben. Die Einspeiseeinrichtung kann hierbei mit einem externen Akkumulator stromführend verbunden sein, welcher an einem beliebigen geeigneten Ort an dem Gebäude, beispielsweise in unmittelbarer Nähe der mit den Beleuchtungspaneelen versehenen Gebäudefläche, angeordnet ist, oder mit entsprechenden elektrischen Anschlusselementen versehen sein. Hierdurch ist ein autarker bzw. stand-alone Betrieb (also unabhängig von externen Einrichtungen) der Beleuchtungspaneele möglich, da diese unmittelbar mittels der an diesen angeordneten Solarscheiben elektrischer Energie zum Betrieb der Leuchteinrichtung versorgt werden.

Durch die Einspeiseeinrichtung nach Merkmal b) des Anspruchs 1, mittels welcher der von dem Beleuchtungspaneel erzeugte Photostrom in einen Akkumulator und/oder in ein Stromnetz einspeisbar ist, ist somit der erzeugte Photostrom allgemein in eine Stromversorgungseinrichtung einspeisbar oder wird in eine solche eingespeist. Die Stromversorgungseinrichtung kann (gegebenenfalls zumindest teilweise auch) zur Stromversorgung externer Einrichtungen ausgebildet sein, wie bei Einspeisung in ein externes Stromnetz. Dies kann auch bei Einspeisung in einen (externen) Akkumulator der Fall sein, von welchem aus der Strom externen Stromverbrauchern zugeführt werden kann. Die Stromversorgungseinrichtung, welcher der von dem Paneel erzeugte Photostrom zugeführt wird, kann auch ein Akkumulator unmittelbar des gegebenen Beleuchtungspaneels sein und/oder auch oder einer Paneelanordnung (bestehend aus mehreren Paneelen), welche das gegebene, den Photstrom erzeugende Paneel umfasst. Der erzeugt Photostrom kann vollständig oder auch nur teilweise dem Akkumulator des gegebenen Paneels zugeleitet werden, so dass gegebenenfalls zumindest ein Teil des Photostromes gleichzeitig oder alternativ auch einer externen Stromversorgungseinrichtung (Stromnetz und/oder Akkumulator) zugeleitet werden kann.

Die Stromversorgungseinrichtung, in welche der von dem gegebenen Paneel erzeugte Photostrom eingespeist wird, kann also die Einspeiseeinrichtung und/oder der Akkumulator zum Betrieb der Leuchteinrichtung sein und also mit der Leuchteinrichtung stromführend verbunden sein. Die Stromversorgungseinrichtung des Merkmals b) des Anspruch 1 kann somit gleich (was als eigenständig erfinderisch besonders bevorzugt ist) oder verschieden sein von der Stromversorgungseinrichtung zum Betrieb der Leuchteinrichtung nach dem Oberbegriff des Anspruch 1.

Bevorzugte Ausführungsformen ergeben sich aus den Unteransprüchen.

Vorzugsweise ist die Leuchteinrichtung derart angeordnet, dass diese in eine Schmalseite der Scheibe Licht einstrahlt und dass zumindest ein Teilbereich einer Hauptfläche oder eine gesamte Hauptfläche den Lichtaustrittsbereich der Scheibe bildet. Hauptflächen der Scheibe sind die jeweils größten Flächen derselben. Die Einstrahlfläche und Lichtaustrittsfläche der Scheibe schließen somit einen Winkel ein, vorzugsweise einen Winkel von zumindest nahezu 90°, z.B. im Bereich von ≥ 45°-60° oder ≥ 75°-80° oder ≥ 85° zueinander. Die Einstrahlung in die erste Scheibe erfolgt somit vorzugsweise seitlich, der Lichtaustritt senkrecht in Bezug auf die Hauptebene der Scheibe. Die Einstrahlrichtung in die erste Scheibe und die Hauptabstrahlrichtung (in welcher das meiste Licht je Zeiteinheit abgestrahlt wird) sind somit vorzugsweise verschiedene Richtungen, welche in dem oben genannten Winkel zueinander stehen können.

Die erste Scheibe und/oder die Solarscheibe weisen vorzugsweise unabhängig voneinander planparallele Außenflächen auf, zumindest jeweils in Bezug auf die Hauptebene bzw. Hauptachse der jeweiligen Scheibe.

Die Beleuchtungsscheibe und die Solarscheibe können einander derart überdecken, dass mindestens 50 bis 75 % der Fläche einer der beiden Scheiben von der jeweils anderen Scheibe überdeckt ist, vorzugsweise ≥ 80 bis 90 %. Besonders bevorzugt sind die beiden Scheiben derart zueinander angeordnet, dass eine der Scheiben von der Lichtaustrittscheibe und Solarscheibe die jeweils andere Scheibe praktisch vollflächig bedeckt, gegebenenfalls bis auf einen Randbereich, welcher ≤ 25 bis 20 % oder ≤ 10 bis 15 %, vorzugsweises ≤ 3 bis 5 % oder ≤ 1 bis 2 % der jeweils anderen Scheibe ausmacht. Der nicht bedeckende Randbereich kann mit einer Einfassung zur Verbindung der beiden Scheiben versehen sein, beispielsweise auch einer leistenförmigen Halterung, der Leuchteinrichtung oder einer anderen Einrichtung, welche am Randbereich einer der beiden Scheiben angeordnet sein kann. Vorzugsweise überdecken beide Scheiben einander vollflächig, d.h. beide Scheiben sind kongruent zueinander ausgebildet.

Allgemein können im Rahmen der Erfindung die Beleuchtungsscheibe und die Solarscheibe im Wesentlichen die gleiche Flächenausdehnung aufweisen, insbesondere wenn beide Scheiben als Verbundglasscheibe hergestellt sind. Gegebenenfalls kann auch eine der beiden Scheiben eine deutlich geringere Fläche aufweisen, als die jeweils andere der beiden genannten Scheiben, beispielsweise ≤ 80 bis 90 % oder ≤ 50 bis 75 % der Fläche der jeweils anderen Scheibe, gegebenenfalls auch ≤ 30 bis 40 % oder ≤ 10 bis 20 % derselben. So kann unter Umständen die Beleuchtungsscheibe durch entsprechende Halterungen an der Tragkonstruktion befestigt sein und die Solarscheibe zu dieser nur eine vergleichsweise geringe Fläche aufweisen, z.B. wie oben angegeben, und beispielsweise an der Beleuchtungsscheibe unmittelbar befestigt sein. Beispielsweise kann die Fläche der Solarscheibe derart bemessen sein, dass diese bei gegebener Sonneneinstrahlung die Beleuchtungsscheibe über einen, zwei oder einige Tage beispielsweise bis zu ein bis zwei Wochen oder bis zu einem Monat, mit Strom versorgen kann, wozu der Akkumulator entsprechend zu dimensionieren ist. Die Solarscheibe kann auch einerseits in etwa die Größe der Beleuchtungsscheibe aufweisen. Die Solarscheibe kann auch eine Fläche aufweisen, welche ≥ 5 bis 10 % oder ≥ 20 bis 30 % der Fläche der-Beleuchtungsscheibe ausmacht, beispielsweise ≥ 50 bis 65 % oder ≥ 75 bis 80 %, beispielsweise auch ≥ 90 bis 95 %. Besonders bevorzugt weisen die Solarscheibe und die Beleuchtungsscheibe dieselbe Größe bzw. Flächenausdehnung auf, wodurch diese auf einfache Weise als Verbundglasscheibe herstellbar sind.

Vorzugsweise ist die Beleuchtungsscheibe, in welche mittels der Leuchteinrichtung Licht eingestrahlt wird, zumindest im Wesentlichen parallel zu der Solarscheibe angeordnet. Hierdurch können die beiden Scheiben auf einfache Weise zu einer baulichen Einheit verbunden werden, beispielsweise einem Beleuchtungspaneel mit einer teil- oder vollumfänglichen Einfassung, welche beide Scheiben miteinander verbindet. Weiterhin werden hierdurch Streuverluste, welche auftreten könnten, wenn die beiden Scheiben nicht parallel zueinander angeordnet werden, verbunden. Die beiden Scheiben können ggf. auch einen Winkel von ≤ 20-30° oder ≤ 5-10° miteinander einschließen, vorzugsweise ≤ 2-3°, besonders bevorzugt ≤ 0,5-1°, insbesondere sind die beiden Scheiben parallel zueinander angeordnet.

Vorzugsweise sind die Beleuchtungsscheibe (erste Scheibe) und die Solarscheibe dauerhaft miteinander verbunden, insbesondere als Verbundglasscheibe hergestellt, wobei die beiden Scheiben vollflächig miteinander verklebt sein können, ggf. unter Anordnung einer Zwischenschicht. Die beiden Scheiben können auch auf andere Weise eine bauliche Einheit darstellen, beispielsweise durch Anordnung einer gemeinsamen Einfassung der beiden Scheiben, welche sich vollumfänglich um die beiden Scheiben erstrecken kann. Allgemein kann das Beleuchtungspaneel aus den beiden Scheiben (einschließlich in Form einer Verbundglasscheibe) bestehen, nämlich der ersten Scheibe (Beleuchtungsscheibe) und der Solarscheibe. Gegebenenfalls kann die Solarscheibe zugleich auch als Beleuchtungsscheibe ausgebildet sein, so dass diese somit quasi ineinander integriert sind. Die Solarscheibe kann somit eine photovoltaisch wirksame Schicht, z.B. Beschichtung, aufweisen, und andererseits einen Bereich, z.B. Schichtdickenbereich, in welchen mittels der Leuchteinrichtung Licht eingestrahlt wird sowie einen Lichtaustrittsbereich, vorzugsweise auf der der Photovoltaikschicht gegenüberliegenden Seite der Scheibe. Vorteilhafterweise sind Solarscheibe und Beleuchtungsscheibe verschiedene Scheiben (gegebenenfalls in Form einer Verbundglasscheibe), da hierdurch die optischen Eigenschaften des Beleuchtungspaneels im Hinblick auf die photovoltaischen Eigenschaften einerseits und die beleuchtungstechnischen Eigenschaften andererseits unabhängig voneinander optimiert werden können. Beispielsweise können die beiden Scheiben aus Materialien (z.B. Glas) unterschiedlicher Zusammensetzungen bestehen, die Beleuchtungsscheibe kann eingefärbt sein (Buntglas), auf einfache Weise mit besonderen Oberflächen versehen sein, beispielsweise Beschichtungen (z. B. organische, anorganische oder metallische Beschichtungen), beispielsweise um bestimmte lichttechnische Effekte, beispielsweise bei Bedampfung mit Metallen, um die Scheibe bezüglich ihrer Oberflächeneigenschaften zu modifizieren, beispielsweise um die Scheibe leichter reinigen zu können, wozu wasserabweisende Beschichtungen aufgebracht sein können, beispielsweise siliziumhaltige Polymere, oder die Beleuchtungsscheibe kann mattiert oder aufgeraut sein, beispielsweise durch Sandstrahlen ,chemisches Ätzen oder dergleichen, um bestimmte Oberflächeneffekte zu erzeugen. Solarscheibe und Beleuchtungsscheibe können hierdurch unabhängig voneinander an die jeweiligen Erfordernisse angepasst und konfektioniert werden. Es versteht sich, dass das Beleuchtungspaneel auch weitere Funktions- oder Tragschichten bzw. weitere Scheiben aufweisen kann, welche sich jeweils unabhängig voneinander teilflächig oder vollflächig über die Beleuchtungsscheibe und/oder die erste Scheibe erstrecken können. Beispielsweise kann eine Tragscheibe vorgesehen sein, welche sich vorzugsweise vollflächig über die Solarscheibe und/oder Beleuchtungsscheibe erstreckt, so dass diese letztgenannten vergleichsweise dünn ausgebildet sein können. Gegebenenfalls kann auch eine weitere Scheibe als Schutzscheibe vorgesehen sein, beispielsweise um die Solarscheibe und/oder die Beleuchtungsscheibe vor äußeren Einwirkungen, beispielsweise mechanischen Einwirkungen, zu schützen. Allgemein kann die Beleuchtungsscheibe eine-größere Dicke aufweisen als die Solarscheibe, so dass die Beleuchtungsscheibe eine Tragfunktion übernehmen kann.

Vorzugsweise ist mindestens eine Halterung des Beleuchtungspaneels vorgesehen, in oder an welcher die Beleuchtungseinrichtung angeordnet ist. Die Leuchteinrichtung kann derart an der Halterung angeordnet sein, dass diese unmittelbar in die jeweilige Scheibe (Beleuchtungsscheibe oder Solarscheibe) Licht einstrahlt, so dass diese dann an einem Lichtaustrittsbereich des jeweiligen Beleuchtungspaneels austritt, wobei der Lichtaustrittsbereich vorzugsweise jeweils eine der beiden Hauptflächen der Scheibe ist. Vorzugsweise ist die Leuchteinrichtung derart an der Halterung angebracht, dass diese unmittelbar Licht in die jeweilige Scheibe einstrahlt. Hierzu kann die jeweilige Halterung mit einem Teilbereich die jeweilige Scheibe durchsetzen, wobei die Leuchteinrichtung an diesem die Scheibe durchsetzenden Teilbereich der Halterung angebracht ist. Dies heißt, dass die jeweiligen Licht imitierenden Leuchtmittel wie beispielsweise Leuchtdioden an dem die jeweilige Scheibe durchsetzenden Bereich der Halterung positioniert sind. Gegebenenfalls können die Leuchtmittel auch an einem anderen Bereich der Halterung vorgesehen sein und z.B. durch Lichtleiter, in welchen das Licht durch z.B. Totalreflektion an den Außenbereichen des Lichtleitelementes geführt wird, von dem Leuchtmittel zu dem Ort der Einstrahlung in die jeweilige Scheibe geführt werden. Gegebenenfalls kann die Halterung die jeweilige Scheibe auch randseitig zumindest teilweise oder vollständig einfassen, z.B. in Form eines Profils ausgebildet sein, welches einen Randbereich der jeweiligen Scheibe aufnimmt, insbesondere in Form eines U-Profils. Das Profil kann sich über ein Teil oder eine gesamte Kante bzw. Schmalseite der zu halternden Scheibe erstrecken. Dadurch, dass die Leuchteinrichtung an der Halterung für das Beleuchtungspaneel, im Speziellen an der Halterung für die Beleuchtungsscheibe und/oder die Solarscheibe, angebracht ist, kann auf eine zusätzliche Halterung der Leuchteinrichtung verzichtet werden und zudem das Licht unmittelbar in die jeweilige Scheibe eingestrahlt werden. Das Beleuchtungspaneel mit Solarscheibe kann hierdurch auf einfache Weise an dem jeweiligen Ort montiert werden. Vorzugsweise sind mehrere oder sämtliche Halterungen des jeweiligen Beleuchtungspaneels mit jeweils einer oder mehreren Leuchteinrichtungen versehen.

Alternativ oder zusätzlich zu der an der Halterung des Paneels angeordneten Leuchteinrichtung umfasst bevorzugt die erste Scheibe eine Leuchteinrichtung, welche von dem Akku gespeist wird. Der Akku ist hierbei besonders bevorzugt an dem Paneel angeordnet, an welchem die jeweilige Leuchteinrichtung angeordnet ist, in Bezug auf dessen Anordnung und Befestigung sei auf die übrigen Ausführungen zur Erfindung verwiesen. Die Leuchteinrichtung kann seitlich in der Scheibe eingelassen und/oder (besonders bevorzugt) in der Scheibe integriert sein, also z.B. im Korpus der Scheibe eingesetzt oder in dieser eingeschmolzen sein, bspw. in Form von in der Scheibe integrierten punktförmigen LED's in Art von Lightspots. Die elektrischen Leitungen wie z.B. Leiterbahnen zur Stromversorgung der Leuchtmittel der Leuchteinrichtung können in der Scheibe integriert sein, z. B. in Form von auf dieser aufgedruckten Leiterbahnen. Ein Teil oder sämtliche der elektrischen Leitungen können zu den Halterungen der Paneele, insbesondere zu mit Akkumulatoren bestückten Halterungen, geführt sein, um die Leuchtmittel mit einer Stromversorgung zu verbinden, vorzugsweise mit mindestens einem an dem Paneel oder der Halterung angeordneten Akku.

Besonders bevorzugt sind eine, mehrere oder sämtliche Halterungen des Beleuchtungspaneels, insbesondere die Halterung zur Festlegung der Beleuchtungsscheibe und/oder der Solarscheibe, jeweils als Punkthalter ausgebildet, welche die jeweilige Scheibe somit im Wesentlichen punktförmig angreifen. Vorzugsweise sind mehrere Punkthalter zur Halterung des Beleuchtungspaneels vorgesehen, welche vorzugsweise voneinander beabstandet und über die Fläche des Beleuchtungspaneels verteilt angeordnet sind. Die Punkthalter können insbesondere in den Eckbereichen und/oder gegebenenfalls in den Bereichen der Kanten des jeweiligen Paneels angeordnet sein. Vorzugsweise sind jeweils mehrere oder sämtliche der Punkthalter (oder allgemein der Halter des Beleuchtungspaneels bzw. von Beleuchtungsscheibe und/oder Solarscheibe) jeweils mit einer Leuchteinrichtung versehen. Mehrere oder sämtliche der Punkthalter eines Beleuchtungspaneels können von einer gemeinsamen Einspeiseeinrichtung des Beleuchtungspaneels und/oder eines Akkumulators des Beleuchtungspaneels gespeist werden.

Vorzugsweise ist an dem Beleuchtungspaneel mindestens ein wiederaufladbarer Akkumulator vorgesehen, welcher von einem Photostrom, welcher von eben diesem oder einem benachbart angeordneten erfindungsgemäßen Beleuchtungspaneel erzeugt ist, wieder aufladbar ist. Besonders bevorzugt ist hierbei die Halterung des Beleuchtungspaneels mit einer Leuchteinrichtung versehen, welche von eben dem an diesem Beleuchtungspaneel angeordneten Akkumulator oder einem Akkumulator eines benachbarten vorzugsweise erfindungsgemäßen, Beleuchtungspaneels gespeist wird. Das Beleuchtungspaneel mit dem an diesem vorgesehenen Akkumulator stellt somit eine autark betreibbare Beleuchtungseinheit dar, welche zudem unabhängig von externen elektrischen Versorgungseinrichtungen wie externen Stromleitungen unabhängig ist. Gegebenenfalls können somit mehrere erfindungsgemäße Beleuchtungspaneele zu einer Anordnung zusammengefasst sein, welche durch einen gemeinsamen Akkumulator betrieben werden können, so dass also ein Akkumulator eines Beleuchtungspaneels mehrere Leuchteinrichtungen anderer Paneele mit Strom speist. Gegebenenfalls kann ein derartiges Beleuchtungspaneel auch eine öder weitere Leuchteinrichtungen umfassen, welche nicht an der Halterung des Beleuchtungspaneels sondern an anderen Einrichtungen befestigt sind, beispielsweise an zumindest einer der Scheiben unmittelbar oder an einer anderen Einrichtung des Paneels. So kann beispielsweise die jeweilige Scheibe mit einer Durchbrechung versehen sein, in welcher die Leuchteinrichtung eingesetzt ist, wobei die Leuchteinrichtung beispielsweise durch gegeneinander liegende Flansche, Befestigungsscheiben einer jeweiligen Scheibe oder den beiden Scheiben gemeinsam befestigt ist, allgemein durch eine geeignete Befestigungseinrichtung. Die Halterung der Leuchteinrichtung kann der Halterung des Paneels, z.B. einer Punkthalterung, entsprechen, ggf. mit dem Unterschied einer fehlenden Lastabtragung zu einer Tragkonstruktion hin.

Vorzugsweise ist das Paneel mit elektrischen Anschlüssen versehen, um die Leuchteinrichtung des jeweiligen Paneels mit einer Stromversorgungseinrichtung eines andern, insbesondere benachbarten Paneels, elektrisch leitend zu verbinden. Die Leuchtenrichtungen mehrerer Paneele können hierdurch durch die Stromversorgungseinrichtung, z.B. einen Akkumulator, eines anderen Paneels versorgt werden, so weniger Akkumulatormulatoren eingesetzt müssen, um alle Paneels der Paneelanordnung mit Strom zu versorgen, was den Wartungsaufwand senkt. Zwei, vier oder mehr Paneele können zu einem Cluster zusammengefasst sein, bei welchem sämtliche Leuchteinrichtungen des Clusters durch die Stromversorgungseinrichtung eines Paneels versorgt werden. Entsprechend kann ein Paneel mit elektrischen Anschlüssen versehen sein, welche den von dem jeweiligen Paneel erzeugten Photostrom einer Einspeiseeinrichtung und/oder einem Akkumulator eines anderen Paneels zuleiten, wobei der Cluster wie oben beschrieben ausgeführt sein kann. Auch hierdurch kann der konstruktive Aufwand der Paneelanordnung insgesamt begrenzt werden.

Allgemein im Rahmen der Erfindung kann die Solarscheibe auch mit einem externen, d.h. außerhalb des Beleuchtungspaneels angeordneten Verbraucher und/oder einem externen Stromnetz verbunden sein, welches beispielsweise zur Stromversorgung des jeweiligen Gebäudes oder Einrichtungen des Gebäudes dient oder ins allgemeine Stromnetz eingespeist wird.

Eine besonders vorteilhafte Ausführungsform ist gegeben, wenn der Akkumulator an der Halterung des Beleuchtungspaneels angebracht ist. Hierdurch ist der Akkumulator auf einfache Weise dauerhaft und stabil an dem Beleuchtungspaneel angeordnet und zum anderen meist leicht zugänglich, da die Halterung gegebenenfalls für Wartungszwecke zugänglich sein muss. Zudem ist mit Befestigung des Paneels ein Befestigungsmittel für den Akkumulator bereitgestellt. Besonders bevorzugt ist der Akkumulator in der Halterung integriert, wozu er beispielsweise von einem Teil der Halterung, z. B. einem Halte- und/oder Verkleidungsteil, abgedeckt sein kann.

Gegebenenfalls kann der Akkumulator auch an einem anderen Bereich des Beleuchtungspaneels angeordnet sein, beispielsweise unmittelbar an der Beleuchtungsscheibe und/oder der Solarscheibe befestigt sein. Gegebenenfalls kann das Beleuchtungspaneel auch an seinem Randbereich eine Halterung für einen Akkumulator aufweisen, beispielsweise einer an dem Befestigungspaneel aufgesetzten Halteschiene oder an einer randseitigen Einfassung des Beleuchtungspaneels. Durch die Anbringung des Akkumulators an der Halterung des Beleuchtungspaneels kann jedoch auf zusätzliche Halteeinrichtungen verzichtet werden und zudem ist der Akkumulator leicht zugänglich.

Der Akkumulator kann an der auf der Solarscheibe zugewandten Seite der Halterung angeordnet sein. Hierdurch ist der Akkumulator auf einfache Weise stromführend mit der Solarscheibe verbindbar, um den Akkumulator mittels der Solarscheibe aufzuladen.

Alternativ oder zusätzlich kann der Akkumulator an der Halterung auf der der Solarscheibe abgewandten Seite der Halterung angeordnet sein, hierdurch ist gegebenenfalls der Akkumulator besonders einfach zugänglich, beispielsweise um diesen auszutauschen, zu reparieren usw.

Nach einer besonders bevorzugten Ausführungsform ist die Halterung des Solarpaneels derart ausgebildet, dass diese ein erstes in Einbaulage vorderes und ein zweites in Einbaulage hinteres Befestigungsteil aufweist, welche eine zwischen diesen angeordnete Glasscheibe und/oder Beleuchtungsscheibe festlegt, und dass ein Halteelement zur Lastabtragung von dem zweiten Befestigungsteil in die Tragkonstruktion vorgesehen ist. Eine solche Halterung kann jeweils als Punkthalter ausgeführt sein, wobei das Paneel durch mehrere, vorzugsweise drei, vier oder mehr derartige Punkthalter befestigt sein kann, die jeweils im Wesentlichen isometrisch ausgebildet sein können und sich nur über einen kleinen Flächenbereich und/oder Kantenbereich der jeweiligen Scheibe erstreckt, beispielsweise um ≤ 2 bis 5 % oder vorzugsweise ≤ 0,5 bis 1 % derselben. Hierdurch kann die jeweilige Scheibe auf einfache Weise und zudem sicher befestigt werden, da diese beidseitig von Halteelementen eingefasst ist. Weiterhin kann hierdurch die Halterung die Solarscheibe und/oder Befestigungsscheibe durchsetzen, so dass beide Scheiben durch dieselbe Halterung befestigt und in dem Durchsetzungsbereich eine Leuchteinrichtung angeordnet sein kann. Die beiden Befestigungsteile können insbesondere derart angeordnet sein, dass diese Solarscheibe und Beleuchtungsscheibe zwischen sich formschlüssig festlegen. Ein Halteelement zur Lastabtragung des Gewichtes des Beleuchtungspaneels in die Tragkonstruktion, z.B. in Form eines Haltebolzens, kann an dem zweiten, in Einbaulage hinteren Befestigungsteil vorgesehen sein. Die Angabe "vorne" bezieht sich hierbei auf die dem Betrachter zugewandte Seite, d. h. die der Tragkonstruktion abgewandte Seite des Beleuchtungspaneels. Die Angabe "hinten" bezieht sich auf die dem Betrachter abgewandte bzw. der Tragkonstruktion zugewandte Seite.

Besonders bevorzugt ist der Akkumulator an dem zweiten, in Einbaulage hinteren Befestigungsteil angeordnet. Zusätzliche Akkumulator-Halterungen sind hierdurch entbehrlich, zudem ist der Akkumulator relativ leicht zugänglich und weiterhin wettergeschützt hinter den Scheiben (sämtlichen Scheiben) des Paneels angeordnet.

Alternativ oder in Kombination hiermit kann der Akkumulator an dem ersten, in Einbaulage vorderen Befestigungsteil angeordnet sein. Auch hierdurch sind zusätzliche Akkumulator-Halterungen entbehrlich und der Akkumulator ist besonders leicht zugänglich, beispielsweise um ihn auszutauschen oder seine Funktion zu überprüfen.

Zwischen dem zweiten, hinteren Befestigungsteil der Halterung und der Tragkonstruktion kann ein Abstandshalter vorgesehen sein, beispielsweise in Form eines Flansches oder einer Hülse, welche zwischen dem zweiten Befestigungsteil und der Tragkonstruktion bei Befestigung der Halterung festgeklemmt wird, auch um die Halterung gegenüber der Tragkonstruktion zu fixieren. Allgemein kann der Abstandshalter auch zwischen der Halterung und der Tragkonstruktion vorgesehen sein, um die Halterung von de Tragkonstruktion zu beabstanden.

Nach einer vorteilhaften Variante kann der Akkumulator an dem Abstandshalter angeordnet sein. Auch hierdurch ist eine zusätzliche Akkumulator-Halterung entbehrlich und der Akkumulator auf der wettergeschützten Seite des Beleuchtungspaneels angeordnet. In sämtlichen Varianten, in welchen der Akkumulator unmittelbar an der Halterung des Solarpaneels angeordnet ist, kann dieser in der Halterung integriert sein, so dass dieser gegebenenfalls von dem Betrachter her als Teil der Halterung wahrgenommen wird. Ist der Akkumulator an der Halterung des Beleuchtungspaneels angeordnet, so ist zudem eine besonders kompakte Bauweise möglich, da der Akkumulator unmittelbar benachbart der Leuchteinrichtung angebracht ist und hierdurch stromführende Leitungen minimiert werden, sowie die elektrische Verbindung Akkumulator-Leuchteinrichtung in der Halteeinrichtung integriert bzw. nach außen abgekapselt angeordnet werden kann, wodurch eine wettergeschützte und wartungsarme Bauweise gegeben ist.

Besonders bevorzugt ist die Beleuchtungsscheibe in Einbaulage der Solarscheibe vorgesetzt, d.h. auf der dem Betrachter zugewandten Seite angeordnet, wobei Licht mittels der Leuchteinrichtung in die vorgesetzte weitere Scheibe eingestrahlt wird. Die Solarscheibe ist hierbei hinter der Beleuchtungsscheibe angeordnet, so dass durch die Beleuchtungsscheibe ein nur relativ geringer Anteil des auf das Beleuchtungspaneel fallenden Sonnenlichtes absorbiert wird. Weiterhin ist hierdurch die Solarscheibe vor äußeren Einflüssen und Beschädigungen geschützt. Zudem kann die Beleuchtungsscheibe optisch unabhängig von der Solarscheibe ausgestaltet werden, beispielsweise hinsichtlich bestimmter Beleuchtungseffekte wie Farbeffekte, z.B. wenn mehrfarbige Leuchtdioden bzw. mehrere Leuchtdioden unterschiedlicher Farbe eingesetzt werden und durch eine besondere Steuerung der Aktivierung der Leuchtdioden, z.B. hinsichtlich Zeit und/oder Intensität der Lichtemission, besondere Beleuchtungseffekte erzielt werden sollen. Diese werden dann nicht durch eine ansonsten eventuell notwendige Durchstrahlung der Solarscheibe erwünscht verändert.

Alternativ kann gegebenenfalls die Solarscheibe der Beleuchtungsscheibe vorgesetzt sein, also die Solarscheibe auf der dem Betrachter zugewandten bzw. der Tragkonstruktion abgewandten Seite angeordnet sein. Insbesondere dann, wenn die photovoltaisch wirksame Schicht der Solarscheibe vergleichsweise dünn ausgebildet ist und/oder aus einem geeigneten Material besteht, beispielsweise organischen Materialien, können hierdurch besondere Lichteffekte erzielt werden, wobei die Photovoltaikschicht gegebenenfalls auch aus einem kristallinen anorganischen Material wie z. B. Silizium oder Heterohalbleitern bestehen kann (was allgemein im Rahmen der Erfindung gelten kann), wobei durch Beugung und/oder Brechung an den Kristalliten ebenfalls besondere Lichteffekte entstehen können. Eine Gebäudefassade oder eine andere Einrichtung kann hier auch durch besondere Weise architektonisch gestaltet werden.

Gegebenenfalls können Beleuchtungsscheiben auch beidseitig der Solarscheibe angeordnet sein.

Als vorteilhafte Anordnung hat es sich herausgestellt, wenn die Halterungen, insbesondere in Ausführung als Punkthalter, in den Eckbereichen des Beleuchtungspaneels angeordnet sind, wobei die Einspeiseeinrichtung und/oder der Akkumulator beabstandet von den Halterungen (insbesondere Punkthaltern) an der Solarscheibe angeordnet sein können. Hierdurch können die Leitungswege zur stromführenden Verbindung der Leuchteinrichtung, welche jeweils an einer Halterung angeordnet sein kann, und den Versorgungseinrichtungen wie Einspeiseeinrichtung und/oder Akkumulator besonders kurz ausgeführt werden. Die elektrische Versorgungseinrichtung wie z.B. Einspeiseeinrichtung und/oder Akkumulator kann an dem Beleuchtungspaneel mit einer Halterung versehen sein, welche die jeweilige Scheibe bzw. die Scheiben des Beleuchtungspaneels insgesamt durchsetzt, wobei auch hier ein erstes in Einbaulage vorderes und ein zweites in Einbaulage hinteres Befestigungsteil vorgesehen sein können, welche die zwischen diesen angeordneten Scheiben des Beleuchtungspaneels festlegen und wobei das jeweilige Befestigungsteil die Scheibe außenseitig übergreifen kann. Die beiden Befestigungsteile können dann kraft- und/oder formschlüssig, vorzugsweise lösbar, miteinander befestigt sein. Eine derartige Halterung kann bezüglich der Ausgestaltung ihrer Befestigungsteile eine sonst an dem Beleuchtungspaneel vorgesehenen Halterung, insbesondere Punkthalter, entsprechen, wobei jedoch eine Leuchteinrichtung nicht vorgesehen sein muss, aber gegebenenfalls kann. Bei einer derartigen Halterung kann ein Halteelement zur Lastabtragung in die Tragkonstruktion fehlen. Abgesehen von Halteelement und gegebenenfalls der Leuchteinrichtung kann die Halterung für die elektrische Versorgungseinrichtung mit einer sonst an dem Befestigungspaneel eingesetzten Halterung baugleich ausgeführt sein.

Besonders bevorzugt ist die Einspeiseeinrichtung und/oder der Akkumulator in einer Halterung des Beleuchtungspaneels integriert, insbesondere in einem Punkthalter.

Weiterhin kann eine elektrische Steuerung zur Aktivierung und/oder Deaktivierung der Leuchteinrichtung vorgesehen sein. Die Steuerung kann die Leuchteinrichtung zeitabhängig und/oder in Abhängigkeit von dem in dem jeweiligen Solarpaneel erzeugten Photostrom ansteuern und hierbei die Leuchteinrichtung zumindest teilweise oder vollständig aktivieren und/oder deaktivieren. Die Steuerung kann derart eingerichtet sein, dass bei Erzeugung eines einen vorgegebenen Schwellwert übersteigenden Photostromes (oder Photospannung) die Leuchteinrichtung deaktiviert ist und bei Unterschreitung eines vorgegebenen Schwellwertes eines Photostromes (oder Photospannung) die Leuchteinrichtung aktiviert wird. Bei hoher Sonneneinstrahlung, z.B. tagsüber, kann somit die Leuchteinrichtung deaktiviert sein. Über die Vorgabe der Photostromschwellwerthöhe ist somit einstellbar, ab welcher Umgebungshelligkeit die Leuchteinrichtung aktiviert wird. So kann beispielsweise auch tagsüber bei geringer Helligkeit, z. B. bewölktem Himmel, die Leuchteinrichtung aktiviert sein. Die Leuchteinrichtung kann hierbei jeweils mit mehrfarbigen Leuchtdioden ausgestattet sein, beispielsweise mit Blau-Gelb-Grün-Dioden sein. Unabhängig oder gleichzeitig mit der Aktivierung können die Farbeinstellung der Leuchtdioden mittels der Steuerung angesteuert werden.

Weiterhin ist von der Erfindung ein vormontiertes Beleuchtungspaneel umfasst, bei welchem auch die vorgesehenen elektrischen Bauteile wie Solarscheibe, Leuchteinrichtung, Akkumulator und/oder Einspeiseeinrichtung jeweils teilweise oder vollständig bereits stromführend miteinander verbunden sind. Das vormontierte Beleuchtungspaneel kann hierdurch einfach vor Ort montiert und autark (stand alone Betrieb) betrieben werden.

Die Erfindung wird nachfolgend anhand eines Ausführungsbeispieles beschrieben. Es zeigen:
- Fig. 1: Draufsicht (Fig.1a) und schematische Seitenansicht (Fig.1b) eines erfindungsgemäßen Beleuchtungspaneels,
- Fig. 2: Seitenansicht (Fig. 1b) eines erfindungsgemäßen Beleuchtungspaneels, Halterung und an dieser angeordnetem Akkumulator,
- Fig. 3: eine alternative Ausführungsform des Beleuchtungspaneels nach Fig. 2,
- Fig. 4: eine schematische Darstellung einer Halterung eines erfindungsgemäßen Beleuchtungspaneels nach Fig. 1 mit Leuchteinrichtung.

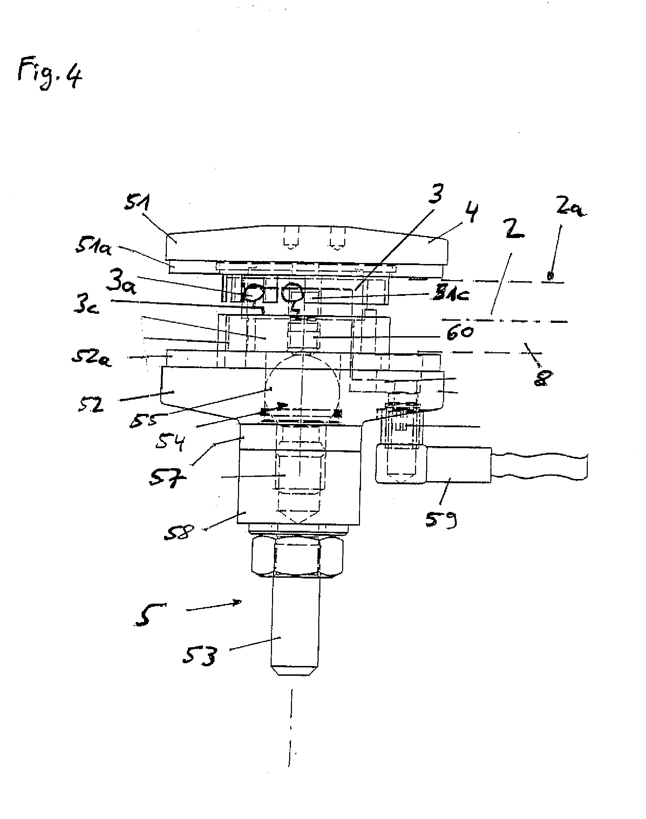

Nach dem Ausführungsbeispiel weist ein Beleuchtungspaneel 1 eine erste Scheibe 2 aus einem Licht leitenden Material und mindestens eine Leuchteinrichtung 3 (siehe Fig. 4) auf, welche Licht in die Scheibe 2 einstrahlt. Als Leuchtmittel können Leuchtdioden oder andere geeignete Leuchtmittel 3a vorgesehen sein. Die Scheibe 2 weist eine Lichtaustrittsfläche 2a auf, welche eine Hauptfläche der Scheibe darstellt, also eine der beiden großen Außenflächen. Die Scheibe kann hierdurch ein Beleuchtungselement darstellen, welches an einer Gebäudeaußenseite oder allgemein an einem Ort mit Sonnen- oder Lichteinstrahlung angebracht sein kann. Das Paneel kann mit einer Halterung 5 zur Befestigung des Paneels an einer Tragkonstruktion 6 versehen sein.

Das Beleuchtungspaneel umfasst eine photovoltaisch wirksame Solarscheibe 8, durch welche unter Sonnenlichteinstrahlung ein Photostrom erzeugbar ist, und welche von der Beleuchtungsscheibe 2 verschieden ist oder mit dieser identisch sein kann. Weiterhin ist eine Einspeiseeinrichtung 10 vorgesehen, mittels welcher der von dem Beleuchtungspaneel erzeugte Photostrom in einen Akkumulator 12 und/oder in ein Stromnetz 14 einspeisbar ist. Der Akkumulator 12 kann ein externer Akkumulator sein, welcher nicht an dem Paneel angeordnet ist, z.B. an der Tragkonstruktion. Das Stromnetz ist ein externes Stromnetz, welches außerhalb des Paneels oder außerhalb der Anordnung von Paneelen angeordnet ist, z.B. ein öffentliches Stromnetz. Alternativ oder zusätzlich kann das Paneel 1 einen von dem Photostrom speisbaren Akkumulator 16 aufweisen, welcher Teil des Paneels 1 ist. Es kann eine Schaltung vorgesehen sein, durch welche in Abhängigkeit von dem Ladezustandes des jeweiligen Akkumulators die Stromeinspeisung/oder -entnahme in/aus dem jeweiligen Akkumulator gesteuert wird. Die Einspeiseeinrichtung 10 und/oder der Akkumulator 12, 16 ist zum Betrieb der Leuchteinrichtung 3 mit dieser stromführend verbunden, wodurch das Paneel eine Stromversorgung aufweist, durch welche die Leuchteinrichtung 3 elektrisch gespeist wird.

Die erste Scheibe (Beleuchtungsscheibe) 2 und die Solarscheibe 8 sind einander teilweise überdeckend angeordnet, genauer gesagt überdecken die beiden Scheiben 2, 8 einander vollflächig und sind an dem Paneel kongruent zueinander angeordnet. Die beiden Scheiben 2, 8 sind also hintereinander an dem Paneel angeordnet. Die beiden Scheiben 2 und 8 können eine Verbundglasscheibe 9 ausbilden, wobei beide Scheiben sich über die gesamte Fläche der Verbundglasscheibe erstrecken können. Die beiden Scheiben können unmittelbar durch die Klebeschicht verbunden sein, ggf. durch weitere Zwischenschichten. Die beiden Scheiben 2, 8 können hierzu dauerhaft miteinander verbunden, z.B. verklebt sein. Gegebenenfalls können die beiden Scheiben zumindest durch eine gemeinsame Einfassung als bauliche Einheit zusammengefasst sein. Die beiden Scheiben 2,8 können planparallel zueinander angeordnet sein und jeweils parallele Hauptflächen aufweisen. Gegebenenfalls kann alternativ oder zusätzlich eine der beiden Scheiben 2, 8 auch einen Teilbereich der anderen Scheibe darstellen, also beide Scheiben benachbart an dem Paneel angeordnet sein.

Mindestens eine Halterung 5 des Beleuchtungspaneels 1 ist vorgesehen, in oder an welcher die Leuchteinrichtung 3 zum Einleiten von Licht in die jeweilige Scheibe anordnet ist. Die Leuchteinrichtung strahlt vorzugsweise seitlich in die jeweilige Scheibe ein, d.h. parallel zu den Hauptflächen derselben. Es können mehrere oder sämtliche Halter 5 zur Halterung des Beleuchtungspaneels jeweils mit einer Leuchteinrichtung versehen sein, gegebenenfalls können auch Halterungen ohne Leuchtenrichtung vorgesehen sein. Die Einspeiseeinrichtung 10 kann mit mehreren Leuchteinrichtungen bzw. mit Leuchteinrichtungen versehenen Halterungen durch elektrische Leitungen 11 (z.B. in Form aufgedampfter Leiterbahnen oder integrierter Kabel) verbunden sein, so dass mehrere Halter bzw. mehrere Leuchteinrichtungen, welche an unterschiedlichen Orten angebracht sein können, von einer gemeinsamen Einspeiseeinrichtung des Paneels gespeist werden können.

An dem Beleuchtungspaneel 1 kann somit mindestens ein wieder aufladbarer Akkumulator 16 vorgesehen ist, welcher von dem durch das Paneel erzeugten Photostrom wieder aufladbar ist, wobei mindestens eine an dem Paneel angeordnete Leuchteinrichtung 3 vorgesehen ist, welche von dem an dem Paneel angeordneten Akkumulator 16 gespeist wird. Die Leuchteinrichtung kann an (insbesondere in) einer Halterung 5 des Paneels angeordnet sein. Der Akkumulator 16 ist ebenfalls an einer Halterung angebracht, insbesondere der Halterung 5 mit Leuchteinrichtung 3.

An der Einspeiseeinrichtung oder an anderer geeigneter Stelle kann ein Transformator (nicht dargestellt) vorgesehen sein, welcher den von dem Paneel erzeugten Photostrom auf Netzspannung des zur Einspeisung vorgesehenen Stromnetzes transformiert. Weiterhin kann unabhängig hiervon ein Transformator vorgesehen sein, welcher einen Netzstrom auf eine Betriebsspannung für die Leuchteinrichtung transformiert, wenn die Leuchteinrichtung durch einen Netzstrom betrieben wird. Im Allgemeinen ist die Leuchteinrichtung als Niederspannungsleuchteinrichtung ausgeführt, welche z.B. mit 18V betrieben werden kann.

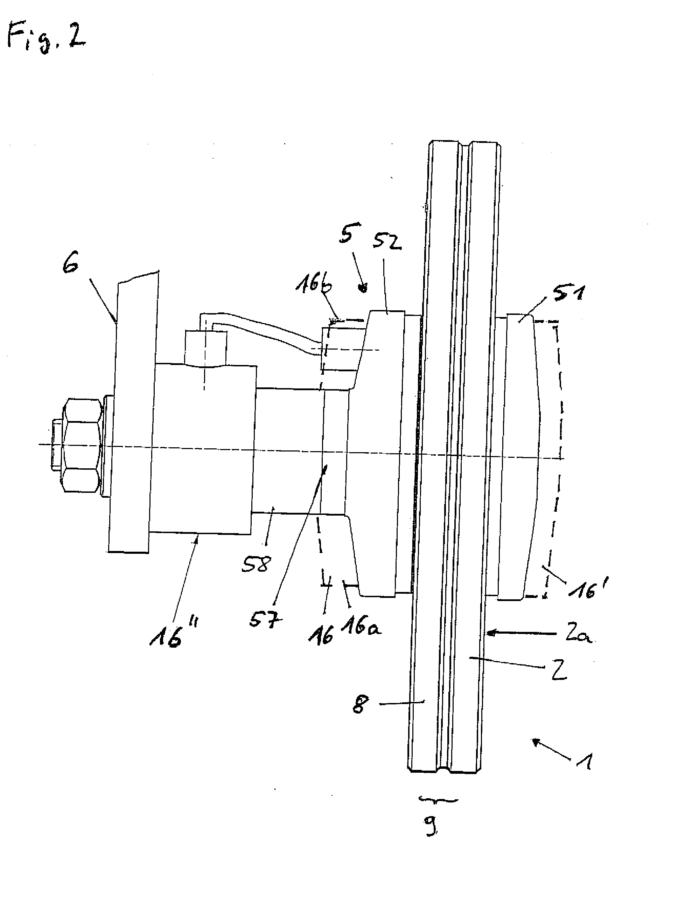

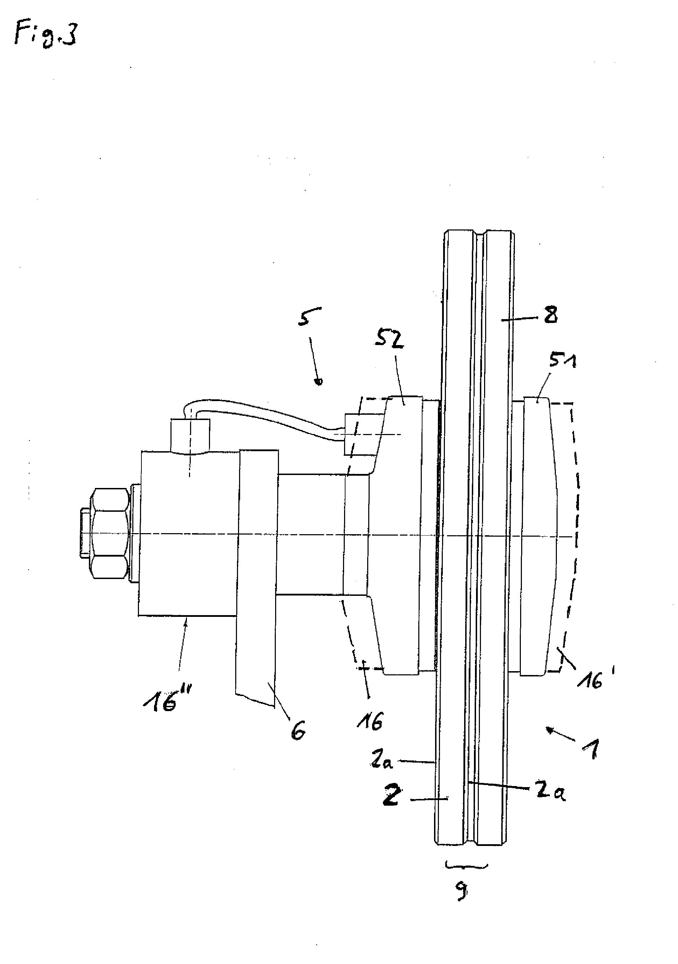

Der mindestens eine Akkumulator der jeweiligen elektrischen Einrichtung kann zwischen Tragkonstruktion 6 und Scheibe 2,8 angeordnet sein, insbesondere bei Befestigung des Akkumulators an der Halterung der Scheibe (Fig. 2). Gegebenenfalls kann der Akkumulator auf der der Scheibe abgewandten Seite der Tragkonstruktion angeordnet sein, wodurch der Akkumulator besonders geschützt ist. Der Akkumulators kann hierdurch leicht zugänglich angeordnet sein, z.B. von Seite der Tragkonstruktion her, wenn ein Durchgriff durch diese nicht oder nur erschwert möglich ist (Fig. 3).

Nach einer Ausführungsform ist der Akkumulator 16 an der Halterung 5 auf der der Solarscheibe 8 zugewandten Seite der Halterung angeordnet (Fig. 2). Nach einer anderen Alternative, gegebenenfalls in Kombination, ist der Akkumulator 16'' an der Halterung 5 auf der der Solarscheibe 8 abgewandten Seite der Halterung angeordnet (Fig. 3). Der Akkumulator 16 ist an dem Beleuchtungspaneel vorzugsweise unabhängig von der Halterung und der Solarscheibe demontierbar angebracht, unabhängig von dessen Anbringungsort. Hierzu kann der Akkumulator zwei Teile 16a, 16b umfassen, welche ein Befestigungselement für den Akkumulator jeweils teilweise umfassen, so dass die zusammengefügten Teile des Akkumulators das Befestigungselement umschließen. Das Befestigungselement kann ein Teil der Halterung sein. Die beiden oder ggf. mehreren Akkumulatorteile können jeweils kreissegmentförmig ausgebildet sein und können zusammengefügt einen Vollkreis ausbilden. Die Akkumulatorteile können z.B. jeweils in Form von Halbschalen ausgebildet sein. Beide Akkumulatorteile können eine Akkumulatorfunktion aufweisen und z.B. durch eine elektrische Steckverbindung miteinander elektrisch verbindbar sein, ggf. sind auch eines oder mehrere der kreissegmentförmigen Akkumulatorteile als reines Befestigungsteil ausgebildet.

Die Halterung 5 kann ein erstes in Einbaulage vorderes Befestigungsteil 51 und ein zweites in Einbaulage hinteres Befestigungsteil 52 aufweisen, welche die zwischen diesen angeordnete erste Scheibe und/oder Solarscheibe bzw. Verbundglasscheibe 9 festlegen (Fig. 2-4). Zwischen Befestigungsteil und Scheibe kann jeweils ein Zwischenelement 51a, 52a wie z.B. eine Gummischeibe angeordnet sein, welches Verkratzen verhindert und zur Vermeidung von Spannung eine gewisse Deformierbarkeit und/oder Kompressibilität aufweist. Ein Halteelement 53 zur Lastabtragung von dem ersten Befestigungsteil in die Tragkonstruktion 6 ist vorgesehen, z.B. in Form eines Tragbolzens. Um eine Winkelanpassung der Einbaulage der Halterung 5 zu ermöglichen weist diese einen arretierbaren Schwenkmechanismus 54 auf, wobei die Befestigungsteile 51, 52 um einen Kugelkopf 55 verschwenkbar und mittels eines Arretierungsmittels wie z.B. einer Madenschraube die Halterung feststellbar ist. Die Verschwenkung oder allgemein Lageeinstellung wird durch ein deformierbares Zwischenstück 57, z.B. in Form einer Gummischeibe, ermöglicht.

Zwischen dem zweiten, in Einbaulage hinteren Befestigungsteil 52 und der Tragkonstruktion kann ein Abstandshalter 58 vorgesehen sein, gegen welches das Befestigungsteil 52 zur Festlegung der Halterung verklemmbar bzw. kraftbeaufschlagbar ist, z.B. mittels einer geeigneten Schraubverbindung, so das der Abstandshalter 58 zwischen Befestigungsteil 52 und der Tragkonstruktion festliegt. Der Abstandshalter 58 ist somit vorzugsweise nicht deformierbar, z.B. aus Metall. Zwischen dem Abstandshalter 58 und dem Befestigungsteil 52 kann das deformierbare Zwischenstück 57 angeordnet sein. Ferner ist eine elektrische Leitung 59 vorgesehen, mittels derer die elektrischen Einrichtungen der Halterung wie Akkumulator und/oder Leuchteinrichtung mit anderen elektrischen Einrichtungen des Paneels oder vorzugsweise anderer Paneele verbindbar sind, z.B. mit der Einspeiseeinrichtung 10. Der Akkumulator 16 (nicht dargestellt) kann z.B. an dem Abstandshalter angeordnet sein.

Das erste Befestigungsteil 51 kann mittels des Befestigungselementes 51c, z.B. einem Schraubbolzen, an dem zweiten Befestigungsteil 52 festlegbar sein, wobei das Befestigungselement 51c eine Durchbrechung der unmittelbar gehalterten Scheibe/Scheiben 2, 8 durchgreifen kann, um die Teile 51, 52 gegeneinander bzw. gegen die zwischen den Teilen 51, 52 angeordnete Scheibe/Scheiben zu kraftbeaufschlagen und die Scheibe/Scheiben festzulegen. Diese Konstruktion mit punktförmigen Befestigungsteilen 51, 52 stellt einen typischen Punkthalter dar, wobei auch andere geeignete Ausführungsformen möglich sind. Gegebenenfalls ist es auch möglich, dass die Halterung nur eine der beiden Scheiben 2, 8 unmittelbar festlegt und die andere Scheibe an der jeweils ersten Scheibe befestigt, z.B. verklebt ist, wobei vorzugsweise die Beleuchtungsscheibe unmittelbar durch den Halter festgelegt wird, ggf. aber auch die Solarscheibe. Die jeweils andere Scheibe kann z.B. eine Durchbrechung mit Übermaß aufweisen, so dass diese Scheibe außerhalb des Festlegungsbereichs der Halterung angeordnet ist, durch die andere Scheibe aber indirekt an der gegebenen Halterung festgelegt ist. In der Durchbrechung der Scheibe kann die Leuchteinrichtung 3 angeordnet sein, z.B. in Form eines ringartigen Teiles 3, welches eine oder mehrere Leuchtdioden (LED's) 3a trägt. Die Leuchteinrichtung kann zwischen den beiden Befestigungsteilen 51, 52 festgelegt sein. Die Leuchteinrichtung ist mittels einer elektrischen Leitung 3c mit einer Stromquelle, z.B. dem Akkumulator 12 oder 16, 16' und/oder 16" verbunden. Die elektrische Leitung kann außenseitig von der Halterung weggeführt sein oder auch durch den Haltebolzen.

Nach einer ersten Ausführungsform ist der Akkumulator 16 des Paneels an dem zweiten, in Einbaulage hinteren Befestigungsteil 52 bzw. an dem Abstandhalter 58 (gestrichelt: Akkumulator 16'') angeordnet und befestigt. Alternativ oder zusätzlich kann ein Akkumulator 16' (gestrichelt) des Paneels an dem ersten, in Einbaulage vorderen Befestigungsteil 51 angeordnet sein.

Der Akkumulator 16, 16', 16'' und Leuchteinrichtung 3 können an der Halterung 5 angeordnet und durch eine von der Umgebung abgekapselte elektrische Zuleitung verbunden sein. Die elektrische Leitung kann beispielsweise innerhalb der Befestigungsteile 51, 52 und/oder des Abstandshalters 58 und/oder der Tragbolzens 53 verlaufen.

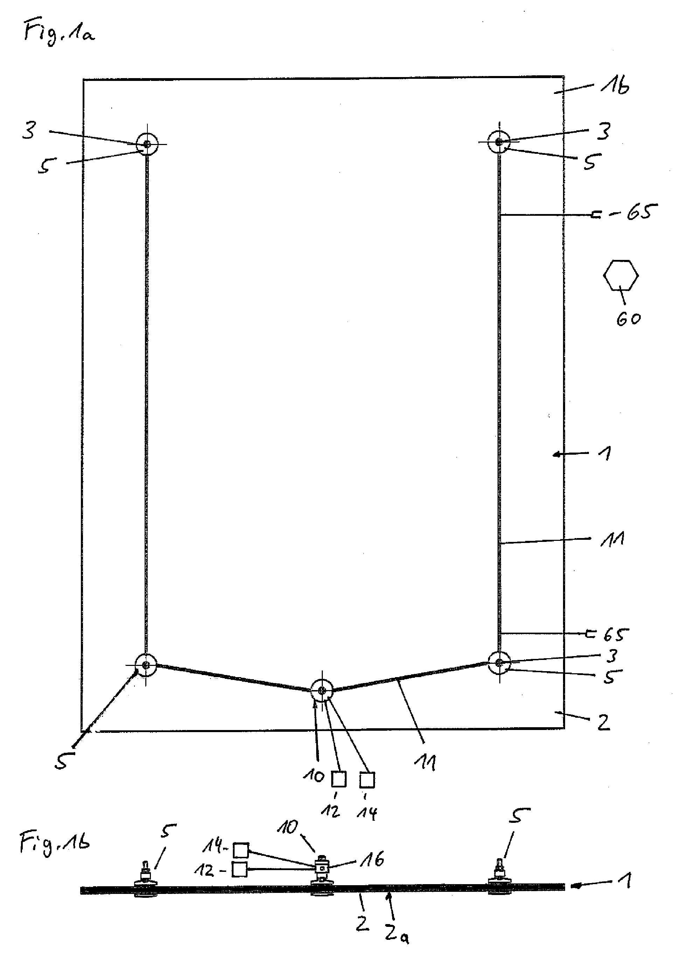

Nach einer Alternative kann die erste Scheibe 2 mit einer Lichtauskoppelungsfläche 2a (z.B. Hauptfläche oder Teil der Hauptfläche 2) in Einbaulage der Solarscheibe 8 vorgesetzt sein, also die Scheibe 2 auf der der Tragkonstruktion abgewandten Seite des Paneels angeordnet sein (Fig. 1). Nach einer anderen Alternative (in Fig. 1 gestrichelt dargestellt) kann die erste Scheibe 2 mit einer Lichtauskoppelungsfläche (z.B. Hauptfläche oder Teil der Hauptfläche 2) in Einbaulage der Solarscheibe 8 hintergesetzt sein, also die Scheibe 2 auf der der Tragkonstruktion zugewandten Seite des Paneels angeordnet sein. Die Lichtabstrahlrichtung der Beleuchtungsscheibe 2 kann hier dieselbe sein wie in Alternative 1, also von der Tragkonstruktion weg, hier also in Durchstrahlungsrichtung durch die Solarscheibe 8, welche dann eine ausreichend geringe Dicke haben muss, um noch ausreichend lichtdurchlässig zu sein, oder aber die Tragkonstruktion wird von der Beleuchtungsscheibe 2 durchstrahlt, was bei offenen Tragkonstruktion z.B. in Ständer-oder Strebenbauweise realisiert sein kann.

Das Halterungssystem für ein Beleuchtungspaneel kann einen oder mehrere Halterungen 5 aufweisen, insbesondere in Form von Punkthaltern und/oder in Form von die Scheibe randseitig einfassenden Profilen. Die Halterungen 5 sind nach dem Ausführungsbeispiel in den Eckbereichen 1b des Paneels angeordnet. Die Einspeiseeinrichtung 10 und/oder der Akkumulator 16, 16', 16'' ist beabstandet von den Halterungen an dem Paneel angeordnet. Akkumulator und/oder Einspeiseeinrichtung können durch Halterungen, insbesondere Punkthalter, an der Scheibe befestigt sein, welche den lastabtragenden Halterungen entsprechen und eine erstes und zweites Befestigungsteil aufweisen, wie oben beschrieben, welche zwischen sich die Scheibe(n) festklemmen. Die Elemente, die das zweite Befestigungsteil 52 mit der Tragkonstruktion verbinden wie das Halteelement 53 zur Lastabtragung in die Tragkonstruktion, der Abstandshalter 58 und der Schwenkmechanismus 54 können hierbei fehlen. Es kann aber ein hinteres und/oder vorderes Befestigungsteil 51, 52 eingesetzt werden, welches mit denen der Halterung 5 baugleich ist, wobei die Aufnahme des hinteren Befestigungsteils für den Schwenkmechanismus durch eine Abdeckung oder dergleichen verschlossen sein kann. Auch die Einspeiseeinrichtung 10 kann in einer Halterung des Paneels integriert sein, insbesondere einer Halterung wie oben beschrieben.

Das Paneel kann eine Steuerung aufweisen oder mit einer Steuerung 60 verbunden sein, z.B. drahtlos, mittels welcher die Leuchteinrichtung aktivierbar und/oder deaktivierbar ist. Die Steuerung kann derart eingestellt oder einstellbar sein, dass die Leuchteinrichtung 3 Licht in die dieser zugeordneten Scheibe(n) 2, 8 zeitabhängig und/oder in Abhängigkeit von dem durch den von dem jeweiligen Beleuchtungspaneel erzeugten Photostrom bzw. Photospannung aktiviert wird. So kann bei Unterschreitung eines vorgegebenen Schwellwertes des durch den außenseitigen Lichteinfall erzeugten Photostromes und/oder Photospannung, z.B. bei Nacht oder bewölktem Himmel, die Leuchteinrichtung aktiviert werden, bei Überschreiten des Schwellwertes, also bei ausreichender Helligkeit der Umgebung, die Leuchteinrichtung deaktiviert werden.

Die Leuchteinrichtung ist beispielsweise mit mehrfarbigen Leuchtdioden ausgestattet, beispielsweise mit Blau-Gelb-Grün-Dioden oder mehreren Leuchtdioden, welche unterschiedlich farbiges Licht abstrahlen. Die Steuerung 60 ist so ausgeführt, dass die Farbeinstellung der Leuchtdioden mittels der Steuerung angesteuert werden kann, bzw. Leuchtdioden unterschiedlicher Farbe unabhängig voneinander angesteuert werden können.

Das Beleuchtungspaneel 1 umfassend die Beleuchtungsscheibe 2, die Solarscheibe 8, die Halterung 5, die Leuchteinrichtung 3, den mindestens einen Akkumulator 16, 16', 16'' und/oder die Einspeiseeinrichtung 10 kann als vormontierte Baugruppe vorliegen, in welcher die elektrischen Bauteile Solarscheibe, Leuchteinrichtung, Akkumulator und/oder Einspeiseeinrichtung stromführend miteinander verbunden sind. Das Paneel ist hierdurch besonders einfach montierbar.

Weiterhin ist das Paneel mit elektrischen Anschlüssen 65 versehen, um die Leuchteinrichtung 3 des jeweiligen Paneels mit einer Stromversorgungseinrichtung eines andern, insbesondere benachbarten Paneels, welches mit dem Paneel 1 baugleich sein kann, elektrisch leitend zu verbinden. Die Leuchtenrichtungen 3 mehrerer Paneele können hierdurch durch die Stromversorgungseinrichtung, z.B. einen Akkumulator 16, 16', 16" eines anderen Paneels versorgt werden, so dass weniger Akkumulatormulatoren eingesetzt müssen, um alle Paneels der Paneelanordnung mit Strom zu versorgen, was den Wartungsaufwand senkt. Die Anschlüsse 65 können so ausgeführt sein, dass zwei, vier oder mehr Paneele zu einem Cluster zusammengefasst werden können, bei welchem sämtliche Leuchteinrichtungen 3 des Clusters durch die Stromversorgungseinrichtung eines Paneels versorgt werden. Die benachbarten Paneele können jeweils mit ihren Kanten bzw. Schmalseiten den Kanten bzw. Schmalseiten des Paneel mit Stromversorgung gegenüberliegen, ggf. können die genannten Paneele auch Eck-auf-Eck einander gegenüberliegen. Die Anschlüsse sind entsprechend angeordnet. Entsprechend kann das Paneel 1 mit elektrischen Anschlüssen 66 versehen sein, welche den von dem jeweiligen Paneel 1 erzeugten Photostrom einer Einspeiseeinrichtung 10 und/oder einem Akkumulator 16, 16', 16" eines anderen Paneels zuleiten, wobei der Cluster wie oben beschrieben ausgeführt sein kann. Auch hierdurch kann der konstruktive Aufwand der Paneelanordnung insgesamt begrenzt werden.

Vorzugsweise sind sämtliche elektrischen Leitungen und/oder elektrischen Einrichtungen des Paneels (wie z.B. Akkumulator, Einspeiseeinrichtung usw.) hinter der frontseitigen Scheibe der beiden Scheiben 2,8 angeordnet, also auf der der Tragkonstruktion zugewandten Seite, wodurch die Leitungen und/oder Einrichtungen geschützt und vandalensicher angeordnet sind. Dies kann allgemein im Rahmen der Erfindung gelten.

## Patentansprüche

1. Beleuchtungspaneel mit einer ersten Scheibe aus einem Licht leitenden Material und mit mindestens einer Leuchteinrichtung, welche Licht in die Scheibe einstrahlt, wobei die Scheibe eine Lichtaustrittsfläche aufweist, so dass die Scheibe ein Beleuchtungselement darstellt, und mit einer Halterung zur Befestigung des Paneels an einer Tragkonstruktion, wobei dem Beleuchtungspaneel eine Stromversorgung zugeordnet ist, welche die Leuchteinrichtung elektrisch speist, **dadurch gekennzeichnet, dass** das Beleuchtungspaneel umfasst:
a) eine photovoltaisch wirksame Solarscheibe, durch welche unter Sonnenlichteinstrahlung ein Photostrom erzeugbar ist, und welche von der Beleuchtungsscheibe verschieden oder mit dieser identisch sein kann,
und
b) (i) eine Einspeiseeinrichtung, mittels welcher der von dem Beleuchtungspaneel erzeugte Photostrom in einen Akkumulator und/oder in ein Stromnetz einspeisbar ist, und/oder (ii) einen von dem Photostrom speisbaren Akkumulator,
und wobei die Einspeiseeinrichtung und/oder der Akkumulator zum Betrieb der Leuchteinrichtung mit dieser stromführend verbunden ist.

2. Beleuchtungspaneel nach Anspruch 1, **dadurch gekennzeichnet, dass** der Akkumulator an der Halterung des Beleuchtungspaneels angebracht ist.

3. Beleuchtungspaneel nach einem der Ansprüche 1 oder 2, **dadurch gekennzeichnet, dass** an dem Paneel mindestens ein wieder aufladbarer Akkumulator vorgesehen ist, welcher von dem durch das Paneel erzeugten Photostrom wieder aufladbar ist, und (i) dass die Halterung des Paneels eine Leuchteinrichtung umfasst, welche von dem an dem Paneel angeordneten Akkumulator gespeist wird und/oder (ii) dass die erste Scheibe eine Leuchteinrichtung umfasst, welche von dem an dem Paneel angeordneten Akku gespeist wird.

4. Beleuchtungspaneel nach einem der Ansprüche 1 bis 3, **dadurch gekennzeichnet, dass** der Akkumulator an der Halterung auf der der Solarscheibe zugewandten Seite der Halterung angeordnet ist und/oder dass der Akkumulator an der Halterung auf der der Solarscheibe abgewandten Seite der Halterung angeordnet ist.

5. Beleuchtungspaneel nach einem der Ansprüche 1 bis 4, **dadurch gekennzeichnet, dass** der Akkumulator an dem Beleuchtungspaneel unabhängig von der Halterung und der Solarscheibe demontierbar angebracht ist.

6. Beleuchtungspaneel nach einem der Ansprüche 1 bis 5, **dadurch gekennzeichnet, dass** die Halterung ein erstes in Einbaulage vorderes und ein zweites in Einbaulage hinteres Befestigungsteil aufweist, welche die zwischen diesen angeordnete erste Scheibe und/oder Solarscheibe festlegen, und dass ein Halteelement zur Lastabtragung von dem ersten Befestigungsteil in die Tragkonstruktion vorgesehen ist.

7. Beleuchtungspaneel nach Anspruch 6, **dadurch gekennzeichnet, dass** der Akkumulator an dem zweiten, in Einbaulage hinteren Befestigungsteil und/oder dass der Akku an dem ersten, in Einbaulage vorderen Befestigungsteil angeordnet ist.

8. Beleuchtungspaneel nach einem der Ansprüche 5 bis 7, **dadurch gekennzeichnet, dass** zwischen der Halterung und der Tragkonstruktion oder zwischen dem zweiten, in Einbaulage hinteren Befestigungsteil und der Tragkonstruktion ein Abstandshalter vorgesehen ist, und dass der Akkumulator an dem Abstandshalter angeordnet ist.

9. Beleuchtungspaneel nach einem der Ansprüche 1 bis 8, **dadurch gekennzeichnet, dass** Akkumulator und Leuchteinrichtung an der Halterung angeordnet sind und durch eine von der Umgebung abgekapselte elektrische Zuleitung verbunden sind.

10. Beleuchtungspaneel nach einem der Ansprüche 1 bis 9, **dadurch gekennzeichnet, dass** die erste Scheibe mit Lichtauskoppelungsfläche in Einbaulage der Solarscheibe vorgesetzt ist und/oder dass die erste Scheibe mit Lichtauskoppelungsfläche in Einbaulage hinter der Solarscheibe angeordnet ist.

11. Beleuchtungspaneel nach einem der Ansprüche 1 bis 10, **dadurch gekennzeichnet, dass** das Halterungsystem für das Paneel eine oder mehrere Halterungen aufweist, welche in den Eckbereichen des Paneels angeordnet sind, und dass die Einspeiseeinrichtung oder der Akkumulator beabstandet von den Haltern an dem Paneel angeordnet ist.

12. Beleuchtungspaneel nach einem der Ansprüche 1 bis 11, **dadurch gekennzeichnet, dass** die Einspeiseeinrichtung in einem Halter des Paneels integriert ist.

13. Beleuchtungspaneel nach einem der Ansprüche 1 bis 12, **dadurch gekennzeichnet, dass** mehrere Halter zur Halterung des Beleuchtungspaneels vorgesehen sind, welche jeweils mit einer Leuchteinrichtung versehen sind, und dass die mehreren Halter von einer gemeinsamen Einspeiseeinrichtung des Paneels gespeist werden.

14. Beleuchtungspaneel nach einem der Ansprüche 1 bis 13, **dadurch gekennzeichnet, dass** die erste Scheibe und die Solarscheibe einander zumindest teilweise überdeckend angeordnet sind.

15. Beleuchtungspaneel nach einem der Ansprüche 1 bis 14, **dadurch gekennzeichnet, dass** die erste Scheibe dauerhaft mit der Solarscheibe verbunden ist oder dass die erste Scheibe und die Solarscheibe als bauliche Einheit ausgebildet sind.
